(19) Europäisches Patentamt
European Patent Office
Office européen des brevets

(11) **EP 2 216 947 A1**

(12) **EUROPEAN PATENT APPLICATION**

(43) Date of publication:
**11.08.2010 Bulletin 2010/32**

(51) Int Cl.:
***H04L 12/58*** (2006.01)

(21) Application number: **09290094.3**

(22) Date of filing: **10.02.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicant: **Alcatel Lucent
75008 Paris (FR)**

(72) Inventors:
• **Schwab, Andreas
70435 Stuttgart (DE)**
• **Wahl, Stefan
71701 Schwieberdingen (DE)**

(74) Representative: **Zinsinger, Norbert et al
Louis Pöhlau Lohrentz,
P.O. Box 30 55
90014 Nürnberg (DE)**

(54) **Method of identifying spam messages**

(57)    The invention concerns a method of identifying spam messages (S) in an IP based telecommunication network, and a network node of the IP based telecommunication network to execute this method. The network node comprises an interface adapted to receive two or more SIP messages (M,S), a spam detection and decision module adapted to analyse the two or more SIP messages (M,S) by determining, for each character string having a predetermined structure which is present in at least one of the two or more SIP messages (M,S), the total number of occurrences of said character string in the two or more SIP messages (M,S), generate an N-dimensional message space whereby N equals the number of different character strings present in the two or more SIP messages (M,S), associate the two or more SIP messages (M,S) with corresponding message points positioned in said N-dimensional message space wherein the N coordinates of a message point associated with a SIP message (M,S) are given by the N values of occurrences of the N different character strings in the said SIP message (M,S), and classify, if a density of message points within a sub-space of the message space having predetermined dimensions, particularly within an N-dimensional sphere having a predetermined centre point and radius, exceeds a predetermined threshold during a predetermined length of time, the SIP messages (M,S) whose associated message points are located within said sub-space as spam messages (S), and a cluster extraction module adapted to determine the density distribution of the two or more message points within said N-dimensional message space.

Fig. 2

EP 2 216 947 A1

**Description**

The present invention relates to a method of identifying spam messages, particularly for identifying/detecting SPIT messages among SIP messages, and a network node to execute said method (SPIT = Spam over Internet Telephony; SIP = Session Initiation Protocol).

Distributed SPIT attacks originating from single or distributed, not necessarily clustered, sources, e.g. controlled bots, pose a threat to single or multiple end users. Types of threats can be misrepresentation (e.g. content, rights, authority, identity), theft of service (e.g. malware insertion), and unwanted contact (e.g. harassment, extortion, unwanted lawful content).

Most threatening are multiple sources of SPIT, so called bot nets, as they may be Trojan horse infected computers which are today primarily used for email spam. The reason why they pose a major threat is that it is not easy to exclude them from the call routing on the client equipment, service provider and infrastructure level. But also single sources of SPIT, coming from offshore regions or not in control of legal regulations, are to be considered.

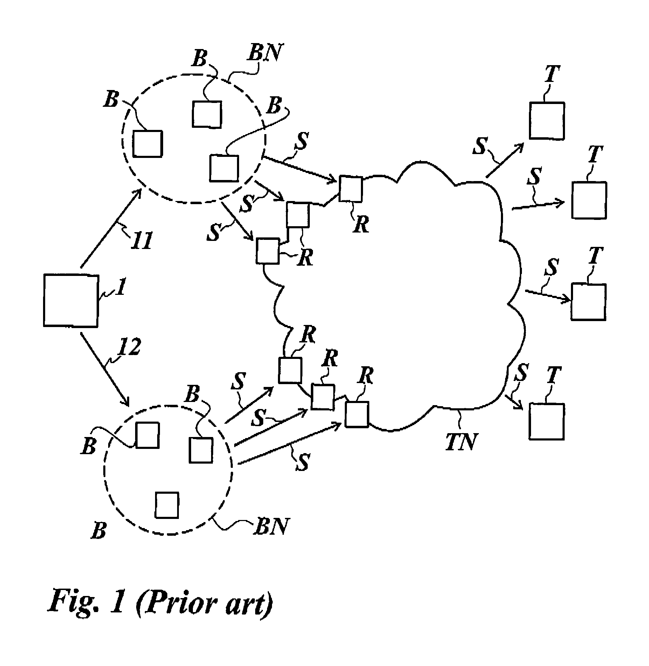

A distributed SPIT attack is illustrated in Fig. 1 which shows a bot controller 1 controlling 11, 12 a plurality of bots B arranged in bot nets BN. The bots B generate spam messages S, e.g. SPIT messages, address them to a multitude of end user terminals T, and send them out via a telecommunication network TN, e.g. a VoIP infrastructure based upon a SIP protocol (VoIP = Voice over IP; IP = Internet Protocol). If these spam messages S are not detected and dropped by nodes R, e.g. access points and border nodes, of the telecommunication network TN, the spam messages S are able to reach and trouble the end user terminals T and the users of these end user terminals T, respectively,

Currently used methods for identification of spam messages often implicate restrictions of an open communication or a complicated handling for calling or called parties.

It is the object of the present invention to provide an improved method of identifying spam messages.

The object of the present invention is achieved by a method of identifying spam messages in an IP based telecommunication network, the method comprising the steps of receiving two or more SIP messages at a network node of said network, analysing the two or more SIP messages by determining, for each character string having a predetermined structure which is present in at least one of the two or more SIP messages, the total number of occurrences of said character string in the two or more SIP messages, generating an N-dimensional message space whereby N equals the number of different character strings present in the two or more SIP messages, associating the two or more SIP messages with corresponding message points positioned in said N-dimensional message space wherein the N coordinates of a message point associated with a SIP message are given by the N values of occurrences of the N different character strings in the said SIP message, determining a density distribution of the two or more message points within said N-dimensional message space, and classifying, if the density of message points within a sub-space of the message space having predetermined dimensions, particularly within an N-dimensional sphere having a predetermined centre point and radius, exceeds a predetermined threshold during a predetermined length of time, the SIP messages whose associated message points are located within said sub-space as spam messages. The object of the present invention is further achieved by a network node of an IP based telecommunication network for identifying spam messages in the IP based telecommunication network, comprising an interface adapted to receive two or more SIP messages, a spam detection and decision module adapted to analyse the two or more SIP messages by determining, for each character string having a predetermined structure which is present in at least one of the two or more SIP messages, the total number of occurrences of said character string in the two or more SIP messages, generate an N-dimensional message space whereby N equals the number of different character strings present in the two or more SIP messages, associate the two or more SIP messages with corresponding message points positioned in said N-dimensional message space wherein the N coordinates of a message point associated with a SIP message are given by the N values of occurrences of the N different character strings in the said SIP message, and classify, if a density of message points within a sub-space of the message space having predetermined dimensions, particularly within an N-dimensional sphere having a predetermined centre point and radius, exceeds a predetermined threshold during a predetermined length of time, the SIP messages whose associated message points are located within said sub-space as spam messages, and a cluster extraction module adapted to determine the density distribution of the two or more message points within said N-dimensional message space.

SPIT, also known as VoIP spam, is a subset of spam. The terms "SPIT" and "spam" are used interchangeably in this description and are all intended to have the meaning of "SPIT".

The term "SIP message" in terms of the present invention comprises SIP messages as such, SIP attachments such as SDP, and other messages which are defined by means of protocol extensions such as IMS (SDP = Session Description Protocol; IMS = IP Multimedia Subsystem). That means that the method of identifying spam messages not only applies to SIP messages as such but also to SIP attachments and SIP extensions.

A character string is a continuous series of characters or control characters, e.g, letters, numbers, signs, separators, etc. Preferably, a character is any entity which can be represented with eight bits, i.e. a byte. A structure of a character string may be determined as the length of the string, i.e. the number of characters, or as a type of delimiters which delimit the character string in the SIP message. Typical delimiters are separators or control characters occurring in SIP messages, e.g. the "at" sign @ or CRLF,

The N-dimensional message space is an N-dimensional vector space of ordered N-tuples of natural numbers including zero, wherein a metric for determining distances between the N-tuples is defined. As is clear from the description, N is a positive integer. Each message point is represented as an N-tuple of the vector space. The metric allows to determine a distance between two message points.

Preferably, the message space may be built as a Euclidean vector space spanned by N axes. A message point may be thought of as the position of an arrowhead of a vector $v = \{v_1, v_2, ..., v_N\}$ beginning in the origin $\{0, 0, ..., 0\}$ of the vector space whereby the N vector coordinates $\{v_1, v_2,..., v_N\}$ of a vector associated with a SIP message are given by $v_1$ occurrences of each of the N different character strings in this SIP message, with $i \in \{1, ..., N\}$. Then the distance $\Delta$ between two message points $A = \{a_1, a_2, ..., a_N\}$ and $B = \{b_1, b_2, ..., b_N\}$ may be defined as

$$\Delta = \sqrt{(b_1 - a_1)^2 + (b_2 - a_2)^2 + ... + (b_N - a_N)^2}$$ . The vector which points to a message point may also be called "feature vector".

The density distribution or density $\rho$ of two or more message points in a sub-space of the message space is given by the number of message points in the sub-space divided by the volume of the sub-space.

The density of message points within a sub-space of the message space having predetermined dimensions must exceed the predetermined threshold during a predetermined length of time before the SIP messages associated with the message points are classified as SPIT related messages. The time criterion is important because a cluster of message points in the message space may occur even without being related to a SPIT attack, e.g. caused by random density fluctuations of valid SIP messages in the message space. The longer a cluster is present in the message space, the higher the probability that the corresponding SIP messages are SPIT messages. The probability that a SIP message is a SPIT message increases with the duration of a cluster of message points in the message space. The reason for this relationship is that a cluster of message points is formed because of the high similarity of the corresponding messages, which is a frequent characteristic of SPIT messages. It is possible that two or more SIP messages whose associated message points are present during a length of time t within a sub-space of the message space are classified as spam messages if the ratio of the density $\rho$ of the two or more message points in the sub-space to the length of time t is greater than a predefined threshold: $\rho / t > $ threshold.

Preferably, pre-determining the centre point of the N-dimensional sphere does not mean an arbitrary determination, but means that the centre point has been determined during a learning and training phase, e.g. by a module executing a function for self-learning purposes of the spam message identification system and for calibration of spam criteria.

This invention proposes a viable concept for protection against single and concerted/distributed SPIT attacks. It is based on the assumption that the intention of SPIT attacks is not to threaten the infrastructure, rather their primary target and victim is the called phone-user. But the signalling messages of the SPIT calls have common parts of parameter context and content, even if they originate in bot-nets. These common parts depend on the fact that the initial signalling messages are sent from bot software, which set up the messages hard-coded and not using any protocol stack as normally done in IP soft- and hard-phones. But these common parts cannot be predicted and may differ from one SPIT attacker to another.

Preferably, the SPIT attacks/threats are identified and/or treated and/or removed at the distributed border nodes (both for access and transit) in order to protect the aimed VoIP subscribers, but as well to keep the traffic load in the VoIP infrastructure at the expected level.

Today's SPIT prevention mechanisms mainly use a) black or white list features which exclude certain calling parties identified as spammers (black-list), or give explicit permissions only to a number of certified callers (white-list), b) approval procedures requiring any approving reaction from the called party during call set-up, or c) reputation services which are installed on the network in order to provide any policy or assertion of registration of the calling party by identification and authentication. Layer 3 and 4 firewalls, IDS, IPS, intelligent message rate supervision, and signature analysis functions are applied to protect the network against load attacks (IDS = Intrusion Detection System; IPS = Intrusion Prevention System). In contrast to these aforementioned currently used SPIT prevention mechanisms, the present invention represents an improved SPIT prevention mechanism which does not restrict an open communication and does not involve a complicated handling for calling or called parties.

A unique benefit of the invention is that it allows an open communication around the world similar to today's Public Switched Telephone Networks (PSTN) and Public Land Mobile Networks (PLMN).

The difficulty in detecting SPIT in a VoIP infrastructure based upon a SIP protocol is that malicious SIP signalling messages are mostly valid formed SIP messages, do not try to attack the provider's network equipment (nevertheless the load for such equipment is rising), and may show a normal call set-up and call release behaviour. The intention of SPIT is not to harm the infrastructure, and the signalling flows are mostly well formed signalling messages showing normal call set-up and call release behaviour. This specific nature of SPIT impedes a coordinated filtering on such border nodes. The present invention provides means to detect SPIT attacks at the borders of the network where the portion of the load caused by single or distributed attacks may be more easily treatable than at other points of a network.

The present invention provides an improved method for identification of spam messages so that SPIT attacks/ threats are identified, treated and removed at the distributed border nodes, both in an access and a transit case. This helps to protect the aimed VoIP subscribers, but as well as to keep the traffic load in the VoIP infrastructure at the expected level.

Although detection of SPIT according to the invention is not able to detect and drop a SPIT message from the first occurrence of an attack because for reliable detection a critical number of incidents/attacks have to be passed before the detection has established itself, this is not a disadvantage because SPIT - unlike other attacks against infrastructure - targets at a huge number of destinations in order to place their content at least at a few victims. Passing a smaller number of these attacks will not constitute a working business case for a SPIT attacker and can be therefore counted as not perilous.

The same applies for cases outside the small local sub-space which are SPIT attacks all the same. Due to the small number of such cases, this can be counted - with the same reasons as above - as not perilous as well,

Further advantages are achieved by the embodiments of the invention indicated by the dependent claims.

According to a preferred embodiment of the invention, the structure of the character string is predetermined as a token defined as a sequence of character strings which are delimited by delimiters contained in a predetermined delimiter set D of delimiters. SIP is a text-based protocol, thus its content can be described in terms of textual tokens and words. The length and granularity of character strings extracted from SIP messages can be controlled choosing the delimiter set D. The less delimiters are defined, i.e. contained in the delimiter set D, the more specific are the extracted tokens. A typical set D of delimiters may be defined as $D = \{:, ;, " =, <, >, /, SPC, CR, LF\}$, comprising the ASCII characters SPC = Space, CR = Carriage Return, LF = Line Feed (ASCII = American Standard Code for Information Interchange).

While the aforementioned tokens are intuitive and expressive to a human analyst, they may not always identify anomalous content of novel attacks due to the definition of delimiter symbols in advance. An alternative technique for implicit definition of character strings are the so-called n-grams. Thus, it is also possible that the structure of the character string is determined as n-grams defined as character strings of a length of n characters, n being a positive integer. Instead of partitioning a SIP message into tokens, the character strings of a length of n characters are extracted from the SIP messages by moving a sliding window of a length of n characters over the message content of the SIP messages. At each position of the sliding window, a sub-string of length n is determined/considered/extracted and its occurrences in the SIP messages are counted. The message space induced by n-grams is high-dimensional, e.g. for n = 4 there exist $256^4$, i.e. more than four billion different dimensions. However, it has to be kept in mind that for both types of features - n-grams and tokens - the number of character strings contained in a single SIP message is linear in its length. As a consequence, a SIP message of length L comprises at most L different n-grams or tokens. Further reductions of different dimensions can be reached by combining token and n-gram methods in a way that the characters inside the tokens are not used for n-gram analysis and only the relevant ASCII alphabet with its 127 characters are used. Even further reductions may be possible by ignoring, at least for a part of the SIP message, whether a character is given as a capital or a small letter (i.e. using a case-insensitive approach). Even further reductions may be possible by a limited usage of control characters in SIP messages. In this way token and n-gram strings may build together the N-dimensional vector space,

According to another preferred embodiment of the invention, at least parts of pre-determined data are removed from the SIP messages before the two or more SIP messages are analysed. The predetermined data which are removed may be particularly at least parts of the values of the "From:" and "To:" header addresses. Preferably, certain ASCII strings are removed from the SIP messages, e.g. SIP "From:" and "To:" header addresses which are different for each SPIT call, similar to spam for email. The exclusion of at least parts of the values of the "From:" and "To:" header significantly reduce further the number of dimensions of the N-dimensional message space where the message points are positioned. It is possible that at least parts of such data are removed from the SIP messages that the correlation is improves. It is also possible that at least parts of such data are removed from the SIP messages that the sub-space of the message space is sharpened.

In a preferred embodiment, previously obtained attributes are inserted into the SIP messages before analysing the two or more SIP messages. These attributes may be for example meta-information regarding previously detected spam messages. Preferably, in front of the SIP message, ASCII strings holding meta-information about the most known SPIT attacks, e.g. data about phrases in display names of the "From:" header, similar to those known from email spam, or often reused "From:" and "To:" header tags hard-coded in the SPIT mail are added into the SIP messages. Preferably, context information as e.g. number of parameters in SIP messages or number of values in SIP parameters considered having the same or similar frequency and occurrence in SPIT attacks from a certain SPIT attacker are added to the SIP message. The idea behind adding previously obtained attributes is to accomplish SPIT detection not only on the context-less ASCII string level of SIP messages but also to include meta-information about SPIT into the SPIT detection.

According to another preferred embodiment of the invention, a weight is added to one or more dimension of the message space associated with character strings satisfying a predetermined criterion, or at least to a predetermined value range of the one or more dimension, when examining whether a density of message points within a sub-space of the message space with predetermined dimensions exceeds a predetermined threshold during a predetermined length of time. Preferably, a weight is added to n-gram strings which, e.g., example contain elements of the delimiter set D = {:, :, =, <, >, /, CRLF, ...} normally separating parameters and values in the SIP messages. In general, those strings are considered having a higher coherence and concurrency in SPIT attacks than in others because the order of parameters in SPIT attacks normally is the same.

To support the discrimination of bot net attacks from (tele-)voting services/ games -whereby also a huge amount of similar messages are generated within a limited time window but these messages are typically addressing a small number of destinations - additional attributes are inserted into the messages for SPIT detection processing, only. This requires supporting functions around the detection algorithm which ensure that the attributes are inserted in front of and removed behind the detection processing. To discriminate a tele-voting service, a 'tele-voting' attribute may be inserted if the "To:" header contains a well-known tele-voting server, preferably at the expected time window. According to another embodiment, a discrimination support function of the network node does not insert an attribute but de-sensitises the area in the hyper-sphere to where the messages, belonging to the tele-voting, are transformed. This means that a detection algorithm can also process messages using classification methods (e.g., for identification and categorisation of unsolicited content such as SPIT) and clustering algorithms (e.g., for identification of common groups of regular messages).

According to another preferred embodiment of the invention, the network node searches the two or more SIP messages, after receipt of the two or more SIP messages at the network node, for signatures which are characteristic for spam messages. A SIP message wherein a signature characteristic for spam messages is found, is classified as a spam message. Preferably, upon receipt of a SIP message, the message is checked according to the ABNF syntax definition and the signature check searches for known SIP exploits and attacks (ABNF = Augmented Backus-Naur Form).

Preferably, the SIP messages are analysed at two or more network nodes of the network, particularly located at different access points of the network. It is possible that the SIP messages are analysed at all network nodes of the same manufacturer. It is possible that the manufacturer supports a data base comprising all his clients, e.g. network providers. Analysis results, particularly density values, positions and dimensions of identified sub-spaces, are exchanged among the two or more network nodes. The analysis results of two or more different nodes of the two or more network nodes are compared to check the analysis results for correlation among two or more SIP messages. An identified correlation among the two or more SIP messages is assessed as a confirmation of the classification of the SIP messages as spam messages. The comparison procedure can be implemented using a central function or can be realised as a distributed function whereby a network node may be a source and a distributor of such an information at the same time. When using the aforementioned central function, analysis results from two or more network nodes are collected and a central decision is drawn which is common for all nodes. In case of a distributed function, each network node draws its independent decision. This exchange of analysis results is very easy and does not consume a lot of bandwidth because, e.g., only the coordinates of the centre and the radius of a hyper-sphere have to be exchanged among the two or more network nodes.

In a preferred embodiment, a coherence of a content of the two or more SIP messages whose message points are within the sub-space are determined. A coherence which exceeds a predetermined threshold during a predetermined length of time is assessed as a confirmation of the classification of the SIP messages as spam messages. Preferably, the instant message content coherence is checked. If the coherence of the instant message content is high, SPIT is very likely detected.

Preferably, information about the length of time between a set-up and a release of a session associated with two or more messages whose message points are within the sub-space are determined. A length of time which is smaller than a predetermined threshold during a predetermined length of time is assessed as a confirmation of the classification of the SIP messages as spam messages. It is meaningful to consult and correlate this information about the length of time between a set-up and a release of a session initiated by a SPIT call because SPIT victims often release the session initiated by a SPIT call within a few seconds. The verification of the concurrent occurrence of other network nodes strengthens the likelihood of a SPIT attack.

According to another preferred embodiment of the invention, the analysis of SIP messages, after receiving the two or more SIP messages at the network node, is limited to SIP messages and SIP attachments as e.g. SDP.

According to another preferred embodiment of the invention, the data associated with SIP messages classified as spam messages, particularly coordinates of message points associated with recently detected spam messages, are stored in a spam database. Preferably, the network node comprises a spam database of this type.

Preferably, the data stored in the spam database are retrieved for self-learning purposes and calibration of spam criteria. Seff-learning purposes and calibration of spam criteria comprises processes where the network node refers to accumulated data in a database storing data about prior spam messages in order to improve the analysis of SIP messages. Preferably, the network node comprises a module providing a self-learning and calibration of spam criteria function.

Preferably, the self-learning module focuses on two simple realisations of geometric SPIT detection, which build on a global and local concept of normality and deviation thereof. We denote the set of SIP messages used for learning by $X = \{x1, ..., xn\}$ and refer to a new incoming message as z,

The following describes a global concept of normality. Network attacks often significantly deviate from normal traffic in terms of contained sub-strings. Thus, it is natural to define SPIT detection using a global model of normality capturing properties shared by the majority of X. A simple geometric shape reflecting this concept is a hyper-sphere. Normality is modelled by placing a hyper-sphere around the vectors of X and deviation is determined by the distance from the centre $\mu$ of the hyper-sphere. Anomalies are identified by large distances from the centre $\mu$. The smallest hyper-sphere enclosing all points in X, can be obtained by means of an optimisation problem and represents the optimal model of normality. A vector ending at the centre of the hyper-sphere is a normality vector.

Unfortunately, unknown SPIT attacks in X may spoil this process and lead to hyper-spheres with larger volume. This problem is alleviated by the technique of regularisation which "softens" the margin of the hyper-sphere, such that outliers, i.e., SPIT message points outside the hyper-sphere, and unknown attacks can be compensated. An introduction to this regularised learning model is provided, e.g., in P. Laskov et al.: Incremental support vector learning: Analysis, implementation and applications. Journal of Machine Learning Research, 7:1909-1936, Sept. 2006, and D. Tax and R. Duin: Support vector domain description. Pattern Recognition Letters, 20(11-13):1191-1199, 1999, covering the respective theory as well as the efficient computation of a self-learning system. Once the centre $\mu$ has been found, deviation from the model of normality is determined by computing the distance of an incoming message z from the centre $\mu$. This approach requires computing only a single distance value for each incoming message, as the centre $\mu$ is fully determined from the vector X during the prior learning phase,

The following describes a local concept of normality. If the SIP traffic monitored at a network node is inherently heterogeneous, e.g., at a large gateway, a global model of normality might not suffice for detection of unknown and novel attacks. The embedded messages are geometrically distributed in different clusters of points hindering application of a single enclosing hyper-sphere. To address this issue, a self-learning system may be extended with a local SPIT detection scheme, which assesses deviation of a message by considering only a fraction of messages in the training data. A local model of normality can be derived using the notion of k-nearest neighbours. A simple deviation from this model is calculated as the average distance of a vector to its k-nearest neighbours.

Messages strongly deviating from their k-nearest neighbours yield a large average distance, while messages close to their neighbours get a low deviation score. The average distance between a set of neighbours, however, is density-dependent. Points in dense regions yield low deviations, while points in sparse areas yield high deviations and consequently are flagged as anomalous, although they do not constitute attacks. Thus, the deviation may be refined using a first term emphasising points that lie far away from its neighbours, and a second term discounting abnormality of points in wide neighbourhood regions. In contrast to the global model, the local model requires determining several distance values.

This self-learning and calibration of spam criteria function is particularly relevant where a SPIT attacker uses a countermeasure against SPIT protection which is based on a SIP message morphology as known today for computer viruses. These SIP message morphologies are embedded in the bot net distributed software in order to deceive the SPIT protection. In case such morphology itself is built on any algorithms with a specific behaviour, a self learning system, consisting of retraining and calibration procedures, is adaptable enough to cover such morphology, i,e. to identify SPIT attacks based on this morphology.

Preferably, the network node further comprises a context insertion and remove module adapted to remove at least parts of predetermined data from the SIP messages, particularly at least parts of the values of the "From:" and "To:" header addresses, and insert a previously obtained attributes, particularly meta-information regarding previously detected spam messages, into the SIP messages before analysing the two or more SIP messages.

These as well as further features and advantages of the invention will be better appreciated by reading the following detailed description of presently preferred exemplary embodiments taken in conjunction with accompanying drawings of which:

Fig. 2     is a diagram of a message space with message points according to an embodiment of the invention message;

Fig. 3     is another diagram of the message space of Fig. 2 wherein an improved analysis has been applied; and

Fig. 4     is a block diagram of a network node according to a preferred embodiment of the invention.

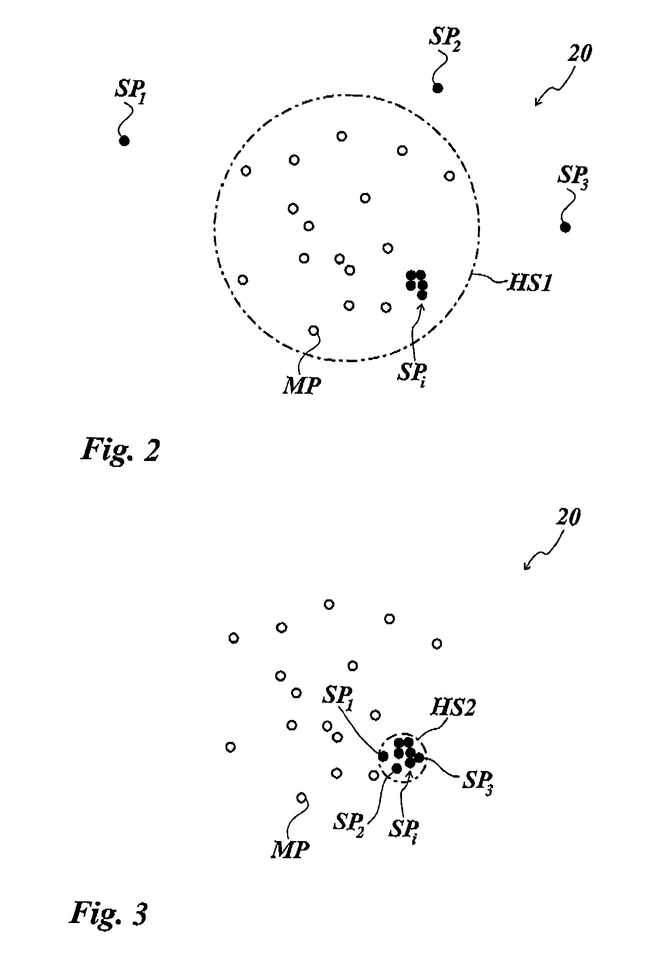

Fig. 2 shows a message space 20 wherein a plurality of message points MP, SP have been positioned. For clarity reasons, the message space 20 has been drawn as a two-dimensional message space. It is clear, however, that the message space 20 may have any number of dimensions. Each of the message points MP, SP is associated with a SIP message which has been analysed by the network node.

The following example illustrates how a simplified SIP message is mapped to message point in a vector space using tokens where the set of delimiters is D = {□, @, :,/}. The analysis of the SIP message BYE□SIP: JOHN@DOE□SIP/ 2, 0 based on the aforementioned predetermined set of delimiters D leads to the following set of tokens: (BYE, SIP, JOHN, DOE, 2.0) with the following corresponding occurrences in the SIP message, i.e., frequency values: (1, 2, 1, 1, 1). The extracted set of tokens: (BYE, SIP, JOHN, DOE, 2.0) gives a five-dimensional vector space spanned by the five tokens. A message point associated with the aforementioned SIP message is positioned within said vector space at the coordinates (1, 2, 1, 1, 1) given by the frequency values of these tokens within said SIP message. For example, the two occurrences of the token "SIP" are reflected in the second coordinate of the message point.

The following example illustrates how the aforementioned simplified SIP message BYE□SIP: JOEEN@DOE□ ± SIP/2. o is mapped to a message point in a vector space using n-grams with n = 4. The analysis of the SIP message based on 4-grams leads to the following set of 4-grams: (BYE□, YE□S, E□SI, □SIP, ...) with the following corresponding occurrences in the SIP message, i.e., frequency values: (1, 1, 2, 2, ...). The extracted set of 4-grams gives a nineteen-dimensional vector space spanned by the different 4-grams. A message point associated with the aforementioned SIP message is positioned within said vector space at the coordinates (1, 1, 2, 2, ...) given by the frequency values of these nineteen 4-grams within said SIP message. Similar to the previous example regarding tokens, the occurrences of the term "SIP" are reflected in the coordinates. In particular, the 4-gram E□SI is contained twice in the SIP message and its frequency (= 2), i.e., its number of occurrences, is given as the third coordinate of the message point.

A network node (not shown) computes a density distribution of the message points MP, SP and defines a first sub-space HS1 of the message space 20, e.g. a hyper-sphere characterised by a centre point and a radius.

The message points MP, SP comprise two types of message points: a) message points MP associated with valid SIP calls, wherein a valid SIP call is defined as a SIP call which is not a SPIT call, and b) message points SP associated with one or more SPIT attacks. In Fig. 2, the message points MP associated with valid SIP calls are represented by open circles while the message points SP associated with SPIT attacks are represented by filled circles. The first sub-space HS1 indicates a volume of the message space 20 wherein the density of message points exceeds a given threshold. The SPIT attack message points $SP_i$ positioned within the first sub-space HS1 are associated with a first SPIT attack while the SPIT attack message points $SP_1$, $SP_2$, $SP_3$ positioned outside the first sub-space HS1 are associated with other SPIT attacks.

Fig. 3 shows the message space 20 of Fig. 2 after executing an improved analysis wherein feature strings with a high potential to be part of the SPIT attacks, for example "display name" in the "From:" header of the SIP messages are weighted. The improved analysis results in a shorter Euclidean distance of the SPIT-related messages points SP from each other. In this way, the improved analysis results in a more segregated cluster of SPIT message points SP in the message space 20 and allows a more accurate detection of such a cluster in the message space 20. Fig. 3 shows that the message points $SP_1$ to $SP_3$ have been moved, by means of the weighting, close to the cluster of the message points $SP_i$ associated with the first SPIT attack so that a much more segregated and clustered set of message points SP can be identified within a second sub-space HS2 which is smaller than the first sub-space HS1. After determination of the centre and the radius of this identified second sub-space HS2 by a first network node, the first network node may communicate these analysis results to one or more other network nodes. Preferably, the characteristics of the second sub-space HS2 are stored in the spam database for later retrieval.

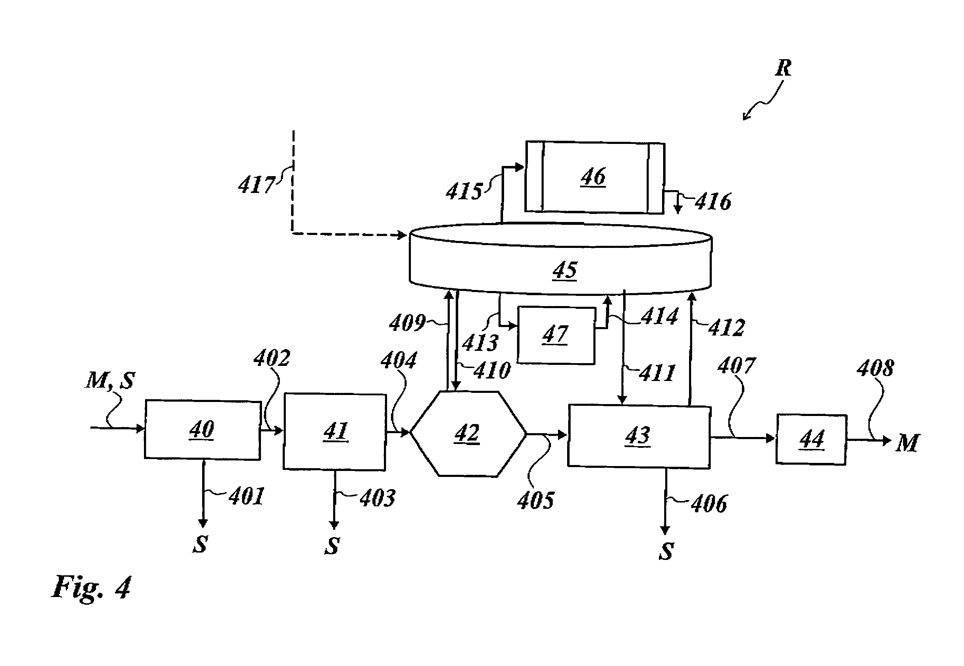

Fig. 4 shows a functional architecture of a network node R according to a preferred embodiment of the invention. The network node R comprises an input interface (not shown), a SIP parser and signature check module 40, an anomaly detection and decision module 41, a spam context insertion and removal module 42, a spam detection and decision module 43, a SIP stack 44, a spam database 45, a self-learning and calibration of spam criteria module 46, and a spam cluster extraction module 47.

The network node R is composed of one or several inter-linked computers, i.e., a hardware platform, a software platform basing on the hardware platform and several application programs executed by the system platform formed by the software and hardware platform. The functionality of the network node R is provided by the execution of these application programs. The application programs or a selected part of these application programs constitute a computer software product providing a call control service as described in the following, when executed on the system platform. Further, such computer software product is constituted by a storage medium storing these application programs or said selected part of application programs.

The spam context insertion and removal module 42 inserts SPIT meaningful meta-information and/or removes SPIT irrelevant data from received SIP messages. The spam detection and decision module 43 provides a SPIT specific detection. The spam cluster extraction module 47 finds SPIT attack clusters in the sub-space, e.g. a hyper-sphere, for a certain time frame in the past, and builds for each cluster its own "local hyper-sphere" with its own normality vector. The spam database 45 receives information about recently identified SPIT attacks and SPIT meta information 409 from the spam context insertion and removal module 42 and stores this information 409. The self-learning and calibration of spam criteria module 46 adapts and separates SPIT relevant information based on a self-learning method. Preferably, the self-learning and calibration of spam criteria module 46 searches 415 data stored in the spam database 45, adapts and separates SPIT relevant information based on a self-learning method, and stores 416 SPIT relevant information in the spam database 45.

The network node R is connected to a telecommunication network TN by means of the input interface. SIP messages M, S arrive at the network node R through the input interface. Upon receipt of a SIP message M, S, the message M, S is checked in the SIP parser and signature check module 40 according to the ABNF syntax definition (Parser), and the signature check searches for known SIP exploits and attacks. SIP messages which are suspect to be spam messages S are dropped 401 by the SIP parser and signature check module 40 as spam.

The remaining SIP messages M, S are transferred 402 to the anomaly detection and decision module 41 which executes an anomaly detection of zero-day exploits and others, considered as unknown, SIP attacks. These attacks conform to the SIP syntax but their target is to harm the infrastructure of the network node R to collapse or to crash by using nonsense but syntactically correct SIP messages. SIP messages which are suspect to be spam messages S are dropped 403 by the anomaly detection and decision module 41 as spam.

The remaining SIP messages M, S are transferred 404 to the spam context insertion and removal module 42 which a) removes from the SIP-messages M, S certain ASCII strings, e.g. SIP "To:" and "From:" header addresses which are different for each SPIT call (similar to spam for email), and/or b) adds, in front of the message ASCII strings holding meta-information about the most known SPIT attacks, e.g. data about phrases in display names of the from-header, similar to those known from email spam, or often reused "From:" and "To:" header tags hard-coded in the SPIT malware. The idea behind this module is to accomplish SPIT detection not only on the context-less ASCII string level of the SIP messages, but also to include meta-information about SPIT into the detection process. The altered string is only used for the spam detection and decision module 43. In any case, the SIP stack 44 receives 407 the original SIP message in case the SPIT detection was negative.

The spam context insertion and removal module 42 receives/retrieves 410 the necessary information from the spam database 45 about what should be appended to the SIP message or removed from the SIP message. A self-learning detection algorithm implemented in the spam cluster extraction module 47 is trained 413 with additional attributes in order to be more sensible for SPIT calls.

The spam detection and decision module 43 calculates a feature vector in the hyper-sphere and its Euclidean distance to its normality. In other words, the spam detection and decision module 43 positions the message points in the message space and determines sub-spaces comprising these message points. Feature strings with high potential to be part of SPIT attacks, e.g. "Display name" in the "From:" header are weighted, e.g. using n-gram/token weights 411 provided by the spam database 45, which may lead to a shorter Euclidean distance of the corresponding message points from the global or local centre of the hyper-sphere. This weighting results in more segregated clusters of SPIT feature vectors in the hyper-sphere (cf. Fig. 3) and allows a more accurate detection of such a cluster in the spam cluster extraction module 47. The mentioned results are only temporarily valid and are updated using a sliding window mechanism.

In a distributed network node R, e.g. a security border node or a SBC, scenario, SPIT relevant classification and clustering results are compared, e.g. concerning location in the area and its density, with the results of other network nodes of the telecommunication network TN (SBC = Session Border Controller). An identified correlation with a sub-set of the nodes R strengthens the likelihood of a SPIT attack and can be used to draw the SPIT decision 406. The comparison procedure can be implemented using a central function or could be realised as a distributed function whereby a network node is a source and distributor of such information at the same time. Furthermore, it is meaningful to let the network nodes draw independent decisions as well as a central and common decision for all nodes.

Preferably, the spam cluster extraction module 47 finds such clusters, condensed vectors of SPIT calls, in the hyper-sphere for a certain time frame in the past. This means that not all learned valid SIP messages are considered by the detection algorithm, rather only those are taken in consideration which are considered as valid SIP messages for a past time period, e.g. using a sliding window with a definable time period, with its own normality vector. SIP messages are supposed to be SPIT related messages if they are transformed inside such detected local hyper-spheres and are found by the spam detection and decision module 43. The spam detection and decision module 43 may add 412 information about message points related to SPIT messages and valid SIP messages to the spam database 45. Similarly, the spam cluster extraction module 47 may add 414 information about the found clusters to the spam database 45. An external source, e.g. an operator, may provide database alignments 417 to the spam database 45.

The treatment 406 of detected SPIT messages S depends on the implementation or customer's choice. For example, detected SPIT messages S may either be dropped or be a matter of already known measures against SPIT, e.g. requiring an additional authentication request from the called party to the caller. SIP messages which are not identified as SPIT messages in the network node R are sent 407 to the SIP stack 44, and forwarded 408 to their destination.

**Claims**

1. A method of identifying spam messages (S) in an IP based telecommunication network (TN), the method comprising the steps of:

   receiving two or more SIP messages (M, S) at a network node (R) of said network (TN);
   analysing the two or more SIP messages (M, S) by determining, for each character string having a predetermined structure which is present in at least one of the two or more SIP messages (M, S), the total number of occurrences of said character string in the two or more SIP messages (M, S);
   generating an N-dimensional message space (20) whereby N equals the number of different character strings present in the two or more SIP messages (M, S);
   associating the two or more SIP messages (M, S) with corresponding message points (MP, SP) positioned in said N-dimensional message space (20) wherein the N coordinates of a message point (MP, SP) associated with a SIP message (M, S) are given by the N values of occurrences of the N different character strings in the said SIP message (M, S);
   determining a density distribution of the two or more message points (MP, SP) within said N-dimensional message space (20); and
   if the density of message points (MP, SP) within a sub-space (HS) of the message space (20) having predetermined dimensions, particularly within an N-dimensional sphere (HS) having a predetermined centre point and radius, exceeds a predetermined threshold during a predetermined length of time, classifying the SIP messages (M, S) whose associated message points (MP, SP) are located within said sub-space (HS) as spam messages (S).

2. The method of claim 1,
   **characterised in**
   **that** the method further comprises the step of:

   predetermining the structure of said character string as tokens defined as character strings which are delimited by delimiters of a predetermined set of delimiters and/or as n-grams defined as character strings of a length of n characters which are extracted from the SIP messages (M, S) by moving a sliding window of a length of n characters over the message content of the SIP messages (M, S).

3. The method of claim 1,
   **characterised in**
   **that** the method further comprises the step of:

   before analysing the two or more SIP messages (M, S), removing at least parts of predetermined data from the SIP messages (M, S), particularly at least parts of the values of the From- and To-header addresses.

4. The method of claim 1,
   **characterised in**
   **that** the method further comprises the step of:

   before analysing the two or more SIP messages (M, S), inserting previously obtained attributes, particularly meta-information regarding previously detected spam messages (S), into the SIP messages (M, S).

5. The method of claim 1,
   **characterised in**
   **that** the method further comprises the step of:

   when examining whether the density of message points (MP, SP) within a sub-space (HS) of the message space (20) with predetermined dimensions exceeds a predetermined threshold during a predetermined length of time, adding a weight to one or more dimensions of the message space (20) associated with character strings satisfying a predetermined criterion, or at least to a predetermined value range of said one or more dimensions.

6. The method of claim 1,
   **characterised in**
   **that** the method further comprises the steps of:

after receipt of the two or more SIP messages (M, S) at the network node (R), searching the two or more SIP messages (M, S) for signatures which are characteristic for spam messages (S); and

classifying a SIP message (M, S) wherein a signature characteristic for spam messages is found as a spam message (S).

7. The method of claim 1,
**characterised in**
**that** the method further comprises the steps of:

analysing SIP messages (M, S) at two or more network nodes (R) of the network (TN), particularly located at different access points of the network (TN);
exchanging analysis results, particularly density values, positions and
dimensions of identified sub-spaces (HS), among the two or more network nodes (R); and
comparing the analysis results of two or more different nodes (R) of the two or more network nodes (R) to check the analysis results for correlations among two or more SIP messages (M, S); and
assessing an identified correlation among the two or more SIP messages (M, S) as a confirmation of the classification of the SIP messages (M, S) as spam messages (S).

8. The method of claim 1,
**characterised in**
**that** the method further comprises the steps of:

determining a coherence of a content of the two or more SIP messages (M, S) whose message points (MP, SP) are within the sub-space (HS); and
assessing a coherence which exceeds a predetermined threshold during a predetermined length of time as a confirmation of the classification of the SIP messages (M, S) as spam messages (S).

9. The method of claim 1,
**characterised in**
**that** the method further comprises the steps of:

determining information about a length of time between a set-up and a release of a session associated with the two or more SIP messages (M, S) whose message points (MP, SP) are within the sub-space (HS); and
assessing a length of time which is smaller than a predetermined threshold during a predetermined length of time as a confirmation of the classification of the SIP messages (M, S) as spam messages (S).

10. The method of claim 1,
**characterised in**
**that** the method further comprises the step of:

storing data associated with SIP messages (M, S) classified as spam messages (S), particularly coordinates of message points (SP) associated with recently detected spam messages (S), in a spam database (45).

11. The method of claim 10,
**characterised in**
**that** the method further comprises the step of:

retrieving the data stored in the spam database (45) for self-learning purposes and calibration of spam criteria.

12. A network node (R) of an IP based telecommunication network (TN) for identifying spam messages (S) in the IP based telecommunication network (TN), comprising an interface adapted to receive two or more SIP messages (M, S), a spam detection and decision module (43) adapted to analyse the two or more SIP messages (M, S) by determining, for each character string having a predetermined structure which is present in at least one of the two or more SIP messages (M, S), the total number of occurrences of said character string in the two or more SIP messages (M, S), generate an N-dimensional message space (20) whereby N equals the number of different character strings present in the two or more SIP messages (M, S), associate the two or more SIP messages (M, S) with corresponding message points (MP, SP) positioned in said N-dimensional message space (20) wherein the N coordinates of a message point (MP, SP) associated with a SIP message (M, S) are given by the N values of occurrences of the N different character strings in the said SIP message (M, S), and classify, if a density of message points (MP, SP) within a sub-space (HS) of the message space (20) having predetermined dimensions, particularly within an N-dimensional sphere (HS) having a predetermined centre point and radius, exceeds a predetermined threshold during a predetermined length of time, the SIP messages (M, S) whose associated message points (MP, SP) are located within said sub-space (HS) as spam messages (S), and a cluster extraction module (47) adapted to determine the density distribution of the two or more message points (MP, SP) within said N-dimensional message space (HS).

**13.** The network node (R) of claim 12,
further comprising a context insertion and removal module (42) adapted to remove at least parts of predetermined data from the SIP messages (M, S), particularly at least parts of the values of the From- and To-header addresses, and insert previously obtained attributes, particularly meta-information regarding previously detected spam messages (S), into the SIP messages (M, S) before analysing the two or more SIP messages (M, S).

**14.** The network node (R) of claim 12,
further comprising a spam database (45) adapted to store data associated with SIP messages (M, S) classified as spam messages (S), particularly coordinates of message points (SP) associated with recently detected spam messages (S).

*Fig. 1 (Prior art)*

*Fig. 2*

*Fig. 3*

*Fig. 4*

Europäisches
Patentamt

European
Patent Office

Office européen
des brevets

# EUROPEAN SEARCH REPORT

Application Number

EP 09 29 0094

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/024555 A1 (RIECK KONRAD [DE] ET AL) 22 January 2009 (2009-01-22) * paragraphs [0004] - [0011], [0026], [0027], [0033] - [0035], [0039], [0040], [0049] - [0051], [0071] - [0077] * | 1-14 | INV. H04L12/58 |
| A | DAMASHEK M: "GAUGING SIMILARITY WITH N-GRAMS: LANGUAGE-INDEPENDENT CATEGORIZATION OF TEXT" SCIENCE, AMERICAN ASSOCIATION FOR THE ADVANCEMENT OF SCIENCE, US, WASHINGTON, DC, vol. 267, no. 5199, 10 February 1995 (1995-02-10), pages 843-848, XP000579827 ISSN: 0036-8075 * the whole document * | 1-14 | |
| A | US 2006/089924 A1 (RASKUTTI BHAVANI [AU] ET AL) 27 April 2006 (2006-04-27) * paragraphs [0059] - [0064], [0075], [0076] * | 1-14 | TECHNICAL FIELDS SEARCHED (IPC) H04L |
| A | WO 2006/052618 A2 (CUTTR INC [US]; PATINKIN SETH [US]) 18 May 2006 (2006-05-18) * page 29, line 11 - line 28 * | 1-14 | |

The present search report has been drawn up for all claims

| Place of search | Date of completion of the search | Examiner |
|---|---|---|
| Munich | 2 July 2009 | Frey, Richard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
      ........................................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 09 29 0094

This annex lists the patent family members relating to the patent documents cited in the above-mentioned European search report.
The members are as contained in the European Patent Office EDP file on
The European Patent Office is in no way liable for these particulars which are merely given for the purpose of information.

02-07-2009

| Patent document cited in search report | | Publication date | Patent family member(s) | | Publication date |
|---|---|---|---|---|---|
| US 2009024555 | A1 | 22-01-2009 | EP | 1963959 A2 | 03-09-2008 |
| | | | WO | 2007131545 A2 | 22-11-2007 |
| US 2006089924 | A1 | 27-04-2006 | WO | 0225479 A1 | 28-03-2002 |
| | | | CA | 2423033 A1 | 28-03-2002 |
| | | | EP | 1323078 A1 | 02-07-2003 |
| | | | NZ | 524988 A | 25-02-2005 |
| | | | US | 2004100022 A1 | 27-05-2004 |
| WO 2006052618 | A2 | 18-05-2006 | CA | 2590476 A1 | 18-05-2006 |
| | | | EP | 1825386 A2 | 29-08-2007 |
| | | | JP | 2008529105 T | 31-07-2008 |
| | | | US | 2006095521 A1 | 04-05-2006 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **P. Laskov et al.** Incremental support vector learning: Analysis, implementation and applications. *Journal of Machine Learning Research,* September 2006, vol. 7, 1909-1936

- **D. Tax ; R. Duin.** Support vector domain description. *Pattern Recognition Letters,* 1999, vol. 20 (11-13), 1191-1199